# EUROPEAN PATENT SPECIFICATION

(11) **EP 2 622 278 B1**
(45) Date of publication and mention of the grant of the patent: **08.05.2019**
(21) Application number: 11790777.4
(22) Date of filing: 30.11.2011
(51) Int. Cl.: F23R 3/28, F02C 7/20

(54) **GAS TURBINE ASSEMBLY AND METHOD THEREFOR**
GASTURBINENANORDNUNG UND VERFAHREN DAFÜR
ENSEMBLE TURBINE À GAZ ET MÉTHODE ASSOCIÉE

(30) Priority: 01.12.2010 US 957476
(43) Date of publication of application: 07.08.2013
(73) Proprietor: Siemens Aktiengesellschaft, 80333 München (DE)
(72) Inventor: BÖTTCHER, Andreas, 40822 Mettmann (DE); FOX, Timothy A., Hamilton, Ontario L8P 2A2 (CA); GARAN, Daniel W., Chuluota, FL 32766 (US); GRIEB, Thomas, 47802 Krefeld (DE); KLEINFELD, Jens, 45481 Mülheim an der Ruhr (DE); KRIEGER, Tobias, 46147 Oberhausen (DE); RAMIER, Stephen A., Fredericton, New Brunswick E3A 5T1 (CA); RITLAND, David M, Winter Park, FL 32789 (US); ZURHORST, Marcus, 45481 Mülheim an der Ruhr (DE)
(86) International application number: PCT/EP2011/071340
(87) International publication number: WO 2012/072659

(56) References cited:
- EP-A1- 2 189 720
- WO-A2-2009/039142
- US-A- 4 216 651
- US-A- 4 441 323
- US-A1- 2008 000 447
- US-A1- 2010 066 035

## Description

### Field of the invention

The present invention relates to a gas turbine and more particularly to an assembly for the gas turbine to provide a sealing mechanism and a method for assembling the assembly for the gas turbine.

### Background of the Invention

In a gas turbine, fuel is delivered through a supply pipe to a combustion chamber where the fuel is mixed with hot air from a compressor to produce a working gas. Particularly, fuel is passed through a rocket unit which includes rockets, the fuel is directed through the rockets into respective swirlers, wherein the hot air from compressor is turbulated and mixed with the fuel and discharged through outlets of the respective swirlers.

During an operation of the gas turbine, cold gas is supplied through the supply pipe; however, other components may be heated to high temperature from hot air coming out of the compressor of the gas turbine. The hot air causes thermal expansion of various components of the gas turbine. It is therefore important to provide a sealing arrangement to prevent hot air from the compressor to heat other components of the gas turbine, as well as prevent the hot air from the compressor to exit the gas turbine to the surrounding environment.

Accordingly, a manifold surrounding the supply pipe and having an internal distribution system of fuel supply is used. However, the manifold is expensive since it is made of material which is corrosion resistant.

It is therefore desirable to provide a flexible and cost effective sealing arrangement for a gas turbine to prevent hot air from the compressor exiting the gas turbine. Further, it is desirable that the sealing arrangement also reduces thermal stress arising due to thermal expansion of the components exposed to the hot air during operation of the gas turbine.

WO 2009/039142 A2 and US 4441323 A1 respectively contain features according to the preamble of the independent claims.

### Summary of the Invention

Briefly in accordance with one aspect of the present invention an assembly for a gas turbine is presented. The assembly includes a gas supply pipe passing through a bore in a flange of the gas turbine for supplying gas to a combustion chamber of the gas turbine and a sleeve surrounding the gas supply pipe, having a first end and a second end, wherein the first end of the sleeve is located at a first longitudinal position of the sleeve outside the bore of the flange distal to the combustion chamber, and wherein the first end is sealingly coupled to the gas supply pipe, and wherein the sleeve is adapted to be sealingly coupled to the flange at the second end such that the sleeve extends along a thickness of the flange, wherein the sleeve has a longitudinal section which is radially extended around the circumference of sleeve, wherein said radial extension is such that the first end of the sleeve is adapted to couple to the gas supply pipe at an oblique angle and wherein the first end is welded to the gas supply pipe and the second end is welded to the flange.

In accordance with another aspect of the present technique, a method for assembling a gas turbine assembly is presented. The method includes passing a gas supply pipe through a bore in a flange for supplying gas to a combustion chamber of the gas turbine, circumscribing the gas supply pipe with a sleeve having a first end and a second end, extending the sleeve through the thickness of the flange, sealingly coupling the first end of the sleeve with the gas supply pipe and sealingly coupling the second end of the sleeve to the flange at a first longitudinal position of the sleeve outside the bore of the flange, distal from the combustion chamber, extending a longitudinal section of the sleeve radially around the circumference of the sleeve,
wherein the longitudinal section of the sleeve is extended radially such that the sleeve is coupled at the first end to the gas supply pipe at an oblique angle followed wherein sealingly coupling the first and second ends is done by welding.

In accordance with yet another aspect of the present technique, a gas turbine is presented. The gas turbine includes a compressor for supplying hot air, a combustion chamber for generating a working gas by mixing gas and the hot air from the compressor. Further, the gas turbine includes an assembly comprising a gas supply pipe passing through a bore of a flange for supplying gas to the combustion chamber and a sleeve surrounding the gas supply pipe, extending along a thickness of the flange, having a first end and a second end, wherein the first end is welded to the gas supply pipe and the second end is welded to the flange.

### Brief Description of the Drawings

The present invention is further described hereinafter with reference to illustrated embodiments shown in the accompanying drawings, in which:
- FIG. 1: is a schematic cross-sectional diagram of a gas turbine;
- FIG. 2: is a diagrammatical illustration of an exemplary rocket unit;
- FIG. 3: is diagrammatical illustration of a flange;
- FIG. 4: is a diagrammatical illustration depicting one example of an assembly for a gas turbine, this example not forming part of the invention;
- FIG. 5: is a cross sectional view of an embodiment of an assembly for the gas turbine;
- FIG. 6: is diagrammatic illustration of an exemplary sleeve;
- FIG. 7: is a cross sectional view of the exemplary sleeve of FIG. 6; and
- FIG. 8: is a flowchart depicting an exemplary method for assembling the assembly of FIG. 5 for a gas turbine.

### Detailed Description of the Invention

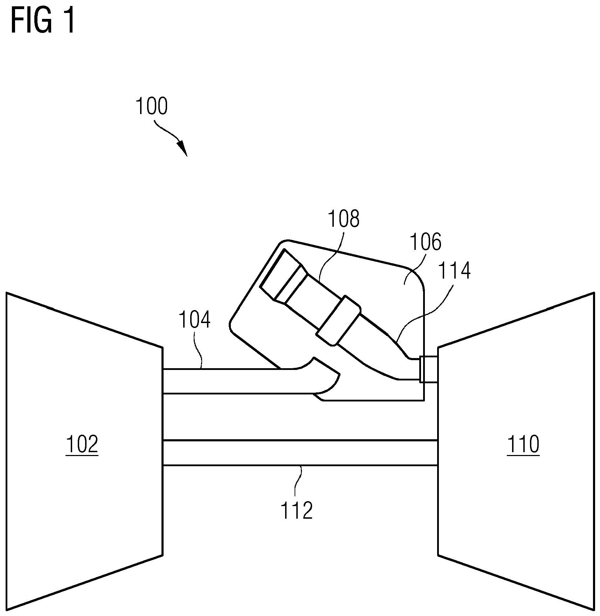

FIG. 1 depicts a schematic cross section of a gas turbine 100 that includes various embodiments of the present invention. The gas turbine comprises a compressor 102, a combustion chamber 108 and a turbine 110. During operation, the compressor 102 takes in air and provides a compressed air to a diffuser 104, which passes the compressed air to a plenum 106 through which the compressed air passes to the combustion chamber 108, which mixes the compressed air with fuel or gas, providing combustion gases also known as the working gas via a transition to the turbine 110, which may be used to generate electricity for example. A shaft 112 is shown connecting the turbine 110 to drive the compressor 102.

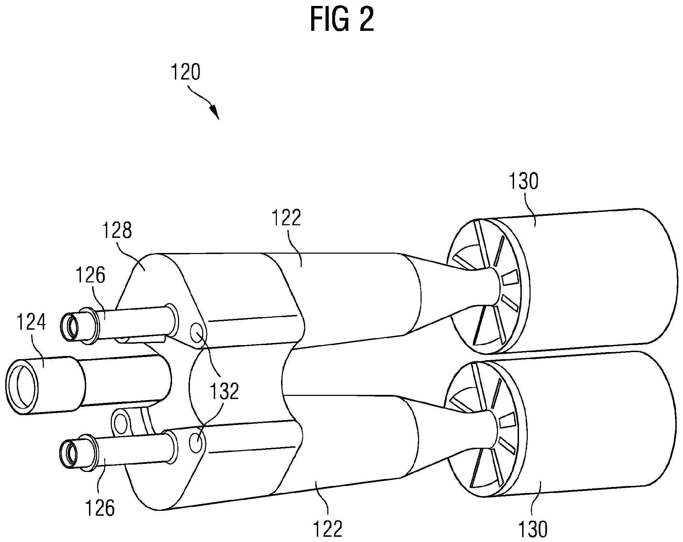

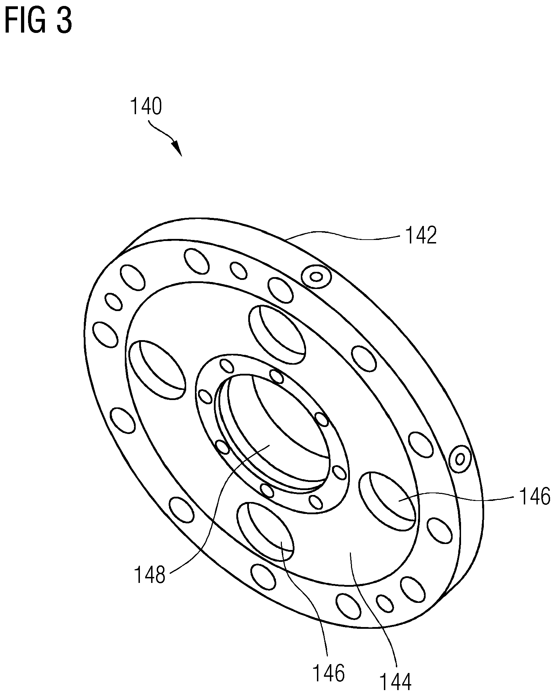

FIG. 2 depicts a double rocket unit 120 according to an aspect of the present technique. A plurality of rockets 122 having a base 128 is depicted. A pipe 124 supplies gas to a pilot burner (not shown). Gas from gas supply pipes 126 is passed into the rockets 122. The air from the compressor 102 of FIG. 1 is mixed with the fuel in swirlers 130 which are attached at free or distal end of the rockets 122. The swirlers 130 generate turbulence in the air stream. Gas is mixed with the turbulent air stream in the swirlers 130 and combusted in the combustion chamber 108 to generate energy. Holes 132 for the purpose of bolting are provided to attach the rocket unit 120 to a flange which will be described with respect to FIG. 3.

FIG. 3 is a diagrammatical illustration depicting a flange 140 for the gas turbine. The flange includes a first side 142 and a second side 144. The first side 142 is a hot side exposed to hot air produced from the compressor. The second side 144 may be referred to as a cold side. The flange 140 includes one or more bore 146 through which a gas supply pipe 126 (see FIG. 2) is passed for supplying gas to the rocket unit 120. The rocket unit 120 is attached to the flange 140 from the first side 142 for providing a stable arrangement. The base 128 of the rocket unit 120 is attached to the flange 140 through bolting, thereby preventing movement and providing enhanced stability to the rocket unit 120.

During operation, the flange 140 is subjected to hot air coming from the compressor 102. More particularly, the first side 142 of the flange 140 is subjected to hot air coming from the compressor 102. The flange 140 may be heated to a temperature of about 350 degree Celsius. However, the gas supply pipe 126 supplies cold gas at a temperature of about 20 degree Celsius. The hot air from the compressor 102 causes thermal expansion of the flange 140 in an axial direction and a radial direction.

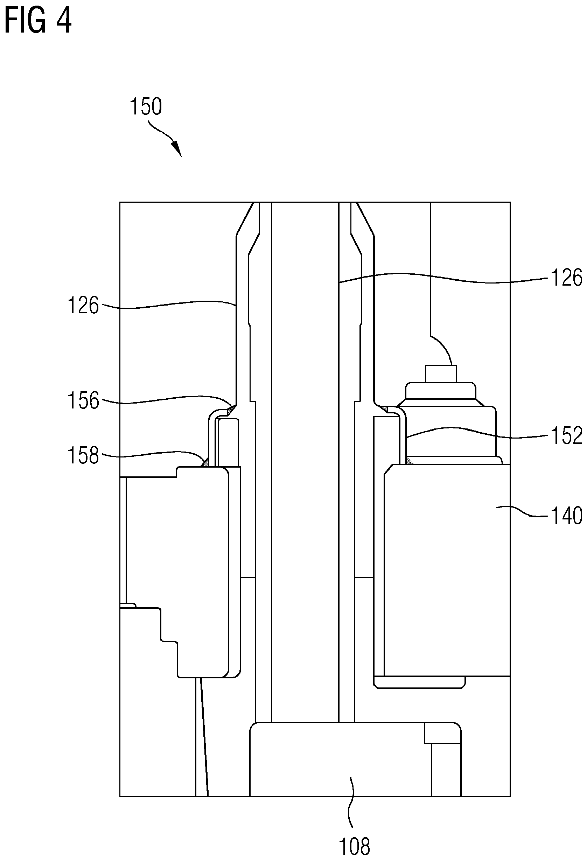

FIG. 4 is a diagrammatical illustration depicting a cross-sectional view of an illustrative example of gas turbine assembly 150 along a longitudinal direction. A longitudinal section of a gas supply pipe 126 is depicted passing through a flange 140. More particularly, the gas supply pipe 126 passes through a bore 146 (see FIG. 3) in the flange 140. A close out fitting 152, which is cylindrical in shape, is placed concentrically over the gas supply pipe 126. The close out fitting 152 is welded to the gas supply pipe 126 at a first joint 156 and also welded to the flange 140 at a second joint 158 as depicted. The close out fitting 152 and the gas supply pipe 126 are rotational symmetric along a longitudinal axis passing through a center of the gas supply pipe 126. Therefore, the first joint 156 is ring shaped around the circumference of the gas supply pipe, and the second joint 158 is also ringshaped. The gas supply pipe 126 is also fastened to the flange 140 through bolting. It may be noted that the close out fitting 152 is attached to the flange 140 at a first side distal to the combustion chamber 108 and the bolting is also done on the first side of the flange 140 distal to the combustion chamber 108. However, such an arrangement may make the system over determined.

During the operation of the gas turbine, the flange 140 which is subjected to hot air produced by the compressor (not shown) expands in an axial direction as well as in a radial direction. Due to high temperature of the hot air the flange 140 is thermally expanded, however, the gas supply pipe 126 carries cold gas which maintains the gas supply pipe 126 at a relatively cold temperature. The close out fitting 152 is attached to the cold gas supply pipe therefore due to difference in temperatures, high stress occur at the first joint 156 and the second joint 158 . By using the close out fitting 152 to couple the gas supply 126 and the flange 140, scope of thermal expansion is reduced, since the assembly becomes over determined. Also, due to over determination the flange 140 and the gas supply pipe 126 of the gas turbine are unable to undergo thermal expansion and thus the life span of these components is decreased.

In accordance with aspects of the present technique, an assembly for a gas turbine is presented. The assembly includes a gas supply pipe passing through a bore in a flange for supplying gas to a combustion chamber of the gas turbine and a sleeve surrounding the gas supply pipe, having a first end and a second end, wherein the first end is sealingly coupled to the gas supply pipe, and wherein the sleeve is adapted to be sealingly coupled to the flange at the second end such that the sleeve extends along a thickness of the flange. By having a sleeve surrounding the gas supply pipe, attached to the gas supply pipe at the first end and the flange at the second end, the sleeve extending along the thickness of the flange, thermal stress occurring due to expansion at the welded joints is reduced due to the distribution of stress to the sleeve along the length of the sleeve.

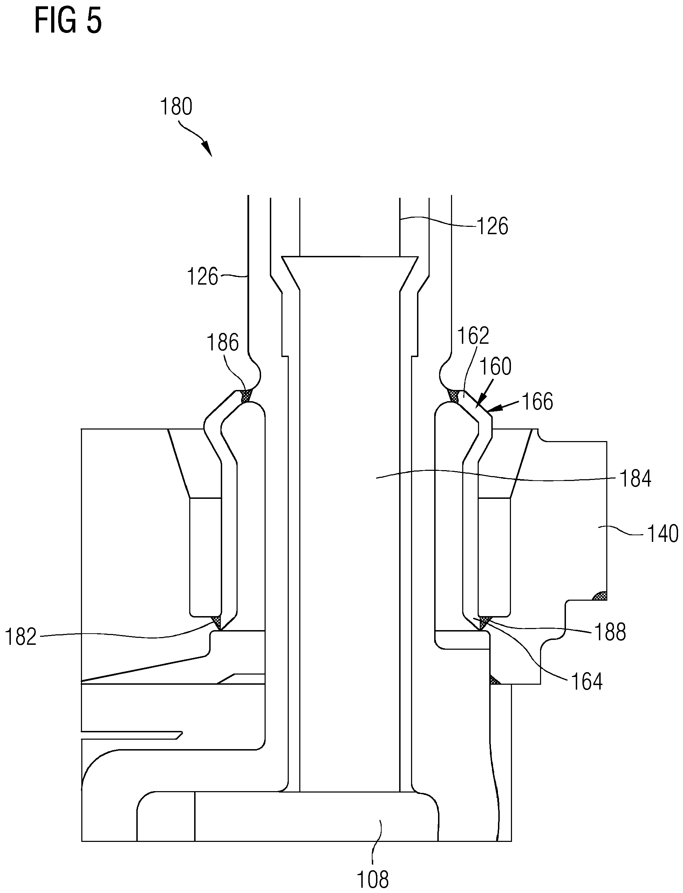

Referring now to FIG. 5, a cross-sectional view of an exemplary assembly 180 for a gas turbine is depicted. The assembly 180 includes the gas supply pipe 126 passing through the bore 146 (see FIG. 3) of the flange 140 of the gas turbine. The gas supply pipe 126 supplies gas to the combustion chamber 108 of the gas turbine. In addition, the assembly includes a sleeve 160 as depicted, surrounding the gas supply pipe 126. A first end 162 of the sleeve is sealingly coupled to the gas supply pipe 126 which means that the first end is coupled to seal the gas supply pipe from the surrounding environment of hot air. A second end 164 of the gas supply pipe 126 is adaptively coupled to the flange 140. The sleeve 160 has a length that extends from outside the bore of the flange 140 extending to the thickness of flange. More particularly, the first end 162 of the sleeve 160 is located at a first longitudinal position of the sleeve 160 outside the bore of the flange 140 distal to the combustion chamber 108, as depicted. The second end 164 is coupled on the inside of the bore of the flange 140. Coupling the sleeve 160 to the flange 140 at the second end 164 enables welding of the second end 164 of the sleeve inside the bore in the flange 140.

In addition, the second end 164 of the sleeve 160 is located at a second longitudinal position of the sleeve 160 inside the bore in the flange 140 in a half towards the combustion chamber 108. The location of the first end 162 and the second end 164 of the sleeve 160 as mentioned hereinabove makes the longitudinal length of the sleeve at least half the thickness of the flange 140. The extent of the sleeve 160 as described hereinabove enables compensating the effect of thermal expansion. It may be noted that the longitudinal length of the sleeve 160 is greater than the longitudinal length of the close out fitting 152 of FIG. 4. By increasing the distance between the positions where the sleeve is coupled to the gas supply pipe and the flange, the effective thermal expansion which leads to the stress at the first end and the second end is reduced.

With continuing reference to FIG. 5, the sleeve 160 is welded at the first end 162 to couple to the gas supply pipe 126. Similarly, the sleeve 160 is welded on the inside of the bore in the flange 140. Welding seams 186, 188 are depicted at locations where the sleeve 160 is attached to the gas supply pipe 126 and the flange 140 respectively.

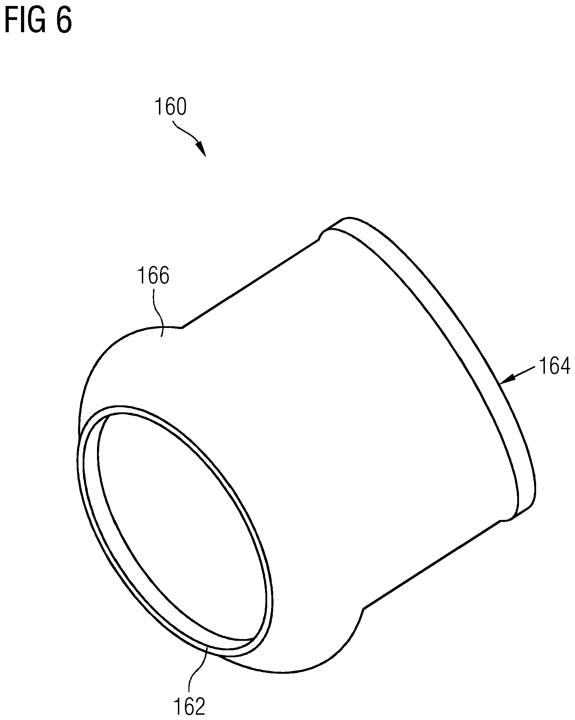

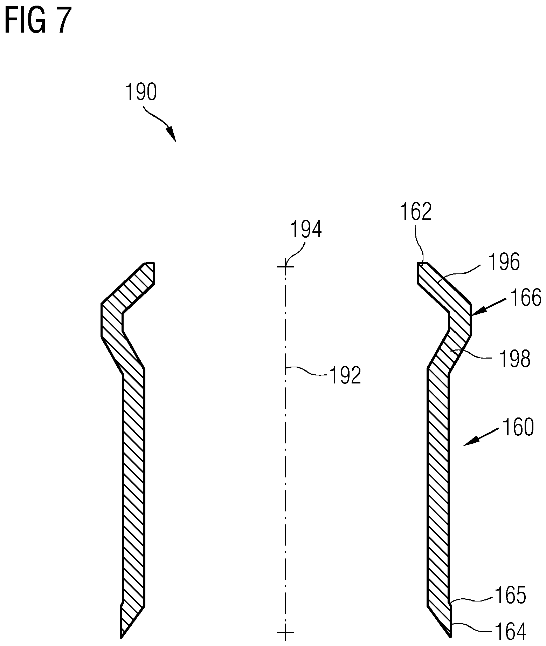

The sleeve as depicted in FIG. 5 includes a longitudinal section 166 which is located outside the bore of the flange 140; the longitudinal section 166 is radially extended around the circumference of the sleeve 160 to enable reduction of thermal stress, which will be described in greater detail with reference to FIG. 6 and FIG. 7.

In addition, the assembly 180 also includes a heat shield 184 inside the gas supply pipe. The heat shield 184 prevents thermal deformation of the gas supply pipe 126 due to the hot air stream produced from the compressor. The heat shield 184 may be formed from a material which is corrosion resistant to gas, such as, but not limited to stainless steel.

Referring now to FIG. 6, the exemplary sleeve 160 of FIG. 5 is depicted. The sleeve 160 includes the first end 162 and the second end 164. The sleeve 160 is cylindrical in shape; however, the sleeve 160 may be formed in other shapes that allow thermal expansion as well as thermal stress reduction. It may be noted that thermal stress is caused due to the longitudinal expansion.

In accordance with aspects of the present technique, the sleeve 160 is formed from a material that has a high strength, excellent fabricability (including joining) and corrosion resistance. An alloy such as Inconel® 625, which is a nickel chromium alloy from Special Metals Corporation, U.S.A. is used for making the sleeve 160. Furthermore, the diameter of the sleeve 160 at the first end 162 is less than the diameter of the sleeve 160 at the second end 164. The sleeve 160 includes a longitudinal section 166 which is radially extended around the circumference of the sleeve 160. A longitudinal profile for the longitudinal section 166 of the sleeve includes a first portion 196 and a second portion 198, the first portion 196 making a first angle with a longitudinal axis 192 and a second portion 198 making a second angle with the first portion 196 to provide the radial extension.

In one embodiment, the first angle is about 45 degrees from the longitudinal axis 192 and the second angle is about 105 degrees from the first portion 196. In other words, the first portion and the second portion form a V-shaped structure perpendicular to the longitudinal axis 192. The radial extension helps in reducing the stress at the location of welding due to an inclination provided by the section 166. This section 166 is located at a position which is proximal to the first end 162 of the sleeve 160. An open space above the flange 140 distal from the combustion chamber provides space for radially extending the longitudinal section 166.

FIG. 7 depicts a cross-sectional view 190 of the sleeve 160 of FIG. 6 in a longitudinal direction. As previously noted the sleeve 160 has a first end 162 and a second end 164. The sleeve 160 is rotationally symmetric around a longitudinal axis 192 passing through a center 194 of the sleeve 160, which enables it to circumscribe the gas supply pipe. In one embodiment, the sleeve 160 is cylindrical in shape to circumscribe the gas supply pipe.

In accordance with aspects of the present technique, the longitudinal section 166 is radially extended around the circumference of the sleeve. The radial extension is such that the first end 162 of the sleeve 160 is adapted to couple to the gas supply pipe 126 at an oblique angle. More particularly, the radially extended longitudinal section 166 at the first end of the sleeve extends inwards, that is, towards the gas supply pipe, couples at an oblique angle. As will be appreciated, the oblique angle enables reducing the stress component at the first end 162, since the stress component is at an angle rather than horizontal, the oblique angle further makes the first end easier to weld to the gas supply pipe. In one embodiment, the oblique angle may be about 45 degrees from the longitudinal axis 192 passing through the center 194 of the sleeve 160, since an angle of about 45 degrees provides optimal solution with respect to thermal stress exerted at the first end and the ease of coupling. The sleeve 160 is shaped such that the diameter at the first end 162 is less than the diameter at the second end 164.

In addition, the second end 164 of the sleeve 160 is elongated radially to adaptively couple to the flange. More particularly, the second end 164 of the sleeve 160 has a radial elongation 165. The radial elongation 165 at the second end 164 enables coupling of the sleeve 160 to the flange. In one embodiment, the radial elongation 165 is at an angle of about 45 degrees from the longitudinal axis 192. An angle of about 45 degrees enables reduction of stress and also an ease of coupling. It may be noted that stress acting horizontally is greater than the stress acting at an angle, since a cosine component of the horizontal stress acting on an object is less.

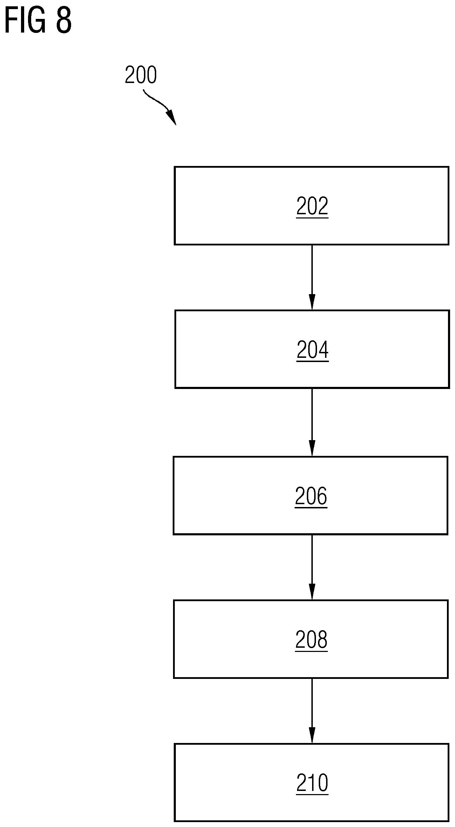

FIG. 8 is a flowchart 200 depicting a method for assembling the exemplary assembly 180 (see FIG. 5) for the gas turbine. At step 202, the gas supply pipe 126 is passed through the bore in the flange 140 to supply gas to the combustion chamber 108 of the gas turbine. A sleeve 160 is inserted circumscribing the gas supply pipe, as at step 204. The sleeve is extended along the thickness of the flange, as at step 206. As previously noted, the sleeve has a first end located at a first longitudinal position of the sleeve outside the bore of the flange, distal to the combustion chamber. In addition, the sleeve has a second end located at a second longitudinal position of the sleeve inside the bore of the flange in a half towards the combustion chamber.

The second end of the sleeve is sealingly coupled to the inside of the bore in the flange, as at step 208. Thereafter, the first end of the sleeve 160 is sealingly coupled to the gas supply pipe, as at step 210. Welding is employed to sealingly couple the first end and the second end of the sleeve to the gas supply pipe 126 and the flange 140 respectively.

In accordance with aspects of the present technique, the second end 164 of the sleeve 160 is welded to the inside of the bore in the flange 140 before attaching the first end 162 of the sleeve 160 to the gas supply pipe 126. Welding the sleeve 160 at the second end 164 and thereafter at the first end 162 enables ease of assembling the sleeve 160.

The exemplary assembly as described hereinabove prevents hot air from the compressor exit the gas turbine into the surrounding environment, due to the sealing arrangement and design of the sleeve. In addition, the assembly also provides reduction in thermal stress at welding joints where the sleeve is attached to the gas supply pipe and the flange.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. An assembly (180) for a gas turbine, comprising:
a flange (140) with a first side (142) and a second side (144),
a gas supply pipe (126) adapted to pass through a bore (146) in the flange (140) for supplying gas to a combustion chamber (108) of the gas turbine (100) and
a sleeve (160) surrounding the gas supply pipe (126), having a first end (162) and a second end (164), wherein the first end (162) is located at a first longitudinal position of the sleeve (160) outside the bore (146) in the flange (140), distal from the combustion chamber (108) and sealingly coupled to the gas supply pipe (126), and wherein the sleeve (160) is adapted to be sealingly coupled to the flange (140) at the second end (164) such that the sleeve (160) extends along a thickness of the flange (140), wherein the sleeve (160) has a longitudinal section (166) which is radially extended around the circumference of sleeve (160),
wherein said radial extension is such that the first end (162) of the sleeve (160) is adapted to couple to the gas supply pipe 126 at an oblique angle
**characterized in that** the first end (162) is welded to the gas supply pipe (126) and the second end (164) is welded to the flange (140).

2. The assembly (180) according to claim 1, wherein the second end (164) is located at a second longitudinal position of the sleeve (160) inside the bore in the flange (140) in a half towards the combustion chamber (108).

3. The assembly according to claim 2, wherein the second end (164) of the sleeve (160) is elongated radially to adaptively couple to the flange (140).

4. The assembly according to claim 1 , wherein the longitudinal section (166) is located proximal to the first end (162) of the sleeve (160).

5. The assembly (180) according to claim 1, wherein the sleeve (160) couples at the first end (162) to the gas supply pipe (126) longitudinally at an oblique angle.

6. A method for assembling a gas turbine assembly (180), comprising:
(202) passing a gas supply pipe (126) through a bore (146) in a flange (140) for supplying gas to a combustion chamber (108) of the gas turbine (100);
(204) circumscribing the gas supply pipe (126) with a sleeve (160) having a first end (162) and a second end (164), wherein the first end (162) is located at a first longitudinal position of the sleeve (160) outside the bore of the flange (140), distal from the combustion chamber (108);
(206) extending the sleeve (160) through the thickness of the flange (140);
(210) sealingly coupling the first end (162) of the sleeve (160) with the gas supply pipe (126); and
sealingly coupling the second end (164) of the sleeve to the flange (140), extending a longitudinal section (166) of the sleeve (160) radially around the circumference of the sleeve (160), wherein the longitudinal section (166) of the sleeve (160) is extended radially such that the sleeve (160) is coupled at the first end (162) to the gas supply pipe (126) at an oblique angle **characterized in** the following step:
sealingly coupling the first and second ends (162, 164) is welding.

7. The method according to claim 6, wherein the second end (164) is located at a second longitudinal position of the sleeve inside the bore (146) of the flange (140) in a half towards the combustion chamber (108).

8. The method according to claim 7, wherein the second end (164) of the sleeve (160) is elongated radially to adaptively couple to the flange (140).

9. The method according to claim 6, wherein the section is located proximal to the first end (162) of the sleeve (160).

10. A gas turbine (100), comprising an assembly according to at least one of the claims 1 - 5.

## Patentansprüche

1. Anordnung (180) für eine Gasturbine, Folgendes umfassend:
einen Flansch (140) mit einer ersten Seite (142) und einer zweiten Seite (144),
ein Gaszufuhrrohr (126), das dazu angepasst ist, durch eine Bohrung (146) in dem Flansch (140) zu verlaufen, um einer Brennkammer (108) der Gasturbine (100) Gas bereitzustellen, und
eine Manschette (160), die das Gaszufuhrrohr (126) umgibt, die ein erstes Ende (162) und ein zweites Ende (164) aufweist, wobei sich das erste Ende (162) an einer ersten Längsposition der Manschette (160) außerhalb der Bohrung (146) in dem Flansch (140), distal von der Brennkammer (108) befindet und mit dem Gaszufuhrrohr (126) abdichtend verbunden ist, und wobei die Manschette (160) dazu angepasst ist, mit dem Flansch (140) an dem zweiten Ende (164) abdichtend verbunden zu sein, sodass sich die Manschette (160) entlang einer Dicke des Flanschs (140) ausdehnt, wobei die Manschette (160) einen Längsabschnitt (166) aufweist, der sich radial um den Umfang der Manschette (160) ausdehnt,
wobei diese radiale Ausdehnung so ausgestaltet ist, dass das erste Ende (162) der Manschette (160) dazu angepasst ist, mit dem Gaszufuhrrohr 126 in einem schrägen Winkel verbunden zu sein,
**dadurch gekennzeichnet, dass** das erste Ende (162) an das Gaszufuhrrohr (126) geschweißt ist und das zweite Ende (164) an den Flansch (140) geschweißt ist.

2. Anordnung (180) nach Anspruch 1, wobei sich das zweite Ende (164) an einer zweiten Längsposition der Manschette (160) in der Bohrung in dem Flansch (140) in einer Hälfte in Richtung der Brennkammer (108) befindet.

3. Anordnung nach Anspruch 2, wobei das zweite Ende (164) der Manschette (160) radial verlängert ist, um adaptiv mit dem Flansch (140) verbunden zu werden.

4. Anordnung nach Anspruch 1, wobei sich der Längsabschnitt (166) proximal zum ersten Ende (162) der Manschette (160) befindet.

5. Anordnung (180) nach Anspruch 1, wobei die Manschette (160) am ersten Ende (162) in Längsrichtung in einem schrägen Winkel mit dem Gaszufuhrrohr (126) verbunden ist.

6. Verfahren zur Montage einer Gasturbinenanordnung (180), Folgendes umfassend:
(202) Führen eines Gaszufuhrrohrs (126) durch eine Bohrung (146) in einem Flansch (140), um einer Brennkammer (108) der Gasturbine (100) Gas bereitzustellen;
(204) Umgeben des Gaszufuhrrohrs (126) mit einer Manschette (160), die ein erstes Ende (162) und ein zweites Ende (164) aufweist, wobei sich das erste Ende (162) an einer ersten Längsposition der Manschette (160) außerhalb der Bohrung des Flanschs (140), distal von der Brennkammer (108) befindet;
(206) Ausdehnen der Manschette (160) durch die Dicke des Flanschs (140);
(210) Abdichtendes Verbinden des ersten Endes (162) der Manschette (160) mit dem Gaszufuhrrohr (126); und
Abdichtendes Verbinden des zweiten Endes (164) der Manschette mit dem Flansch (140),
Ausdehnen eines Längsabschnitts (166) der Manschette (160) radial um den Umfang der Manschette (160), wobei sich der Längsabschnitt (166) der Manschette (160) radial ausdehnt, sodass die Manschette (160) am ersten Ende (162) in einem schrägen Winkel mit dem Gaszufuhrrohr (126) verbunden ist, **gekennzeichnet durch** den folgenden Schritt:
Abdichtendes Verbinden des ersten und zweiten Endes (162, 164) bedeutet Schweißen.

7. Verfahren nach Anspruch 6, wobei sich das zweite Ende (164) an einer zweiten Längsposition der Manschette in der Bohrung (146) des Flanschs (140) in einer Hälfte in Richtung der Brennkammer (108) befindet.

8. Verfahren nach Anspruch 7, wobei das zweite Ende (164) der Manschette (160) radial verlängert ist, um adaptiv mit dem Flansch (140) verbunden zu werden.

9. Verfahren nach Anspruch 6, wobei sich der Abschnitt proximal zum ersten Ende (162) der Manschette (160) befindet.

10. Gasturbine (100), die eine Anordnung nach mindestens einem der Ansprüche 1-5 umfasst.

## Revendications

1. Ensemble (180) pour une turbine à gaz, comprenant :
un flasque (140), ayant une première face (142) et une seconde face (144),
un conduit (126) d'alimentation en gaz, propre à passer dans un alésage (146) du flasque (140), pour envoyer du gaz à une chambre (108) de combustion de la turbine (100) à gaz et
un manchon (160), entourant le conduit (126) d'alimentation en gaz et ayant une première extrémité (162) et une seconde extrémité (164), la première extrémité (162) étant placée à une première position longitudinale du manchon (160) à l'extérieur de l'alésage (146) du flasque (140), de manière distale de la chambre de combustion (108) et étant adjointe de manière étanche au conduit (126) d'alimentation en gaz et dans lequel le manchon (160) est propre à être adjoint de manière étanche au flasque (140) à la seconde extrémité (164), de manière à ce que le manchon (160) s'étende suivant une épaisseur du flasque (140), le manchon (160) ayant une partie (166) longitudinale, qui est prolongée radialement autour de la circonférence du manchon (160),
dans lequel le prolongement radial est tel que la première extrémité (162) du manchon (160) est propre à s'adjoindre au conduit (126) d'alimentation en gaz suivant un angle oblique,
**caractérisé en ce que** la première extrémité (162) est soudée au conduit (126) d'alimentation en gaz et la seconde extrémité (164) est soudée au flasque (140).

2. Ensemble (180) suivant la revendication 1, dans lequel la seconde extrémité (164) est placée à une seconde position longitudinale du manchon (160) à l'intérieur de l'alésage du flasque (140) à la moitié en direction de la chambre (108) de combustion.

3. Ensemble suivant la revendication 2, dans lequel la seconde extrémité (164) du manchon (160) est allongée radialement pour s'adjoindre de manière adaptée au flasque (140).

4. Ensemble suivant la revendication 1, dans lequel la partie (166) longitudinale est placée de manière proximale de la première extrémité (162) du manchon (160).

5. Ensemble (180) suivant la revendication 1, dans lequel le manchon (160) est adjoint à la première extrémité (162) au conduit (126) d'alimentation en gaz longitudinalement suivant un angle oblique.

6. Procédé d'assemblage d'un ensemble (180) de turbine à gaz, comprenant :
(202) faire passer un conduit (126) d'alimentation en gaz dans un alésage (146) d'un flasque (140), pour alimenter en gaz une chambre (108) de combustion de la turbine (100) à gaz ;
(204) circonscrire le conduit (126) d'alimentation en gaz d'un manchon (160) ayant une première extrémité (162) et une seconde extrémité (164), la première extrémité (162) étant placée à une première position longitudinale du manchon (160) à l'extérieur de l'alésage du flasque (140), de manière distale de la chambre (108) de combustion ;
(206) faire s'étendre le manchon (160) dans l'épaisseur du flasque (140) ;
(210) adjoindre de manière étanche la première extrémité (162) du manchon (160) au conduit (126) d'alimentation en gaz et
adjoindre de manière étanche la seconde extrémité (164) du manchon au flasque (140),
faire s'étendre une partie (166) longitudinale du manchon (160) radialement autour de la circonférence du manchon (160), la partie (166) longitudinale du manchon (160) étant prolongée radialement de manière à ce que le manchon (160) soit adjoint à la première extrémité (162) au conduit (126) d'alimentation en gaz, en suivant un angle oblique, **caractérisé par** le stade suivant :
on adjoint de manière étanche les première et seconde extrémités (162, 164) par soudage.

7. Procédé suivant la revendication 6, dans lequel on met la seconde extrémité (164) à une seconde position longitudinale du manchon (160) à l'intérieur de l'alésage du flasque (140) à la moitié en direction de la chambre (108) de combustion.

8. Procédé suivant la revendication 7, dans lequel on allonge radialement la seconde extrémité (164) du manchon (160) pour l'adjoindre de manière adaptée au flasque (140).

9. Procédé suivant la revendication 6, dans lequel on met la partie de manière proximale par rapport à la première extrémité (162) du manchon (160).

10. Turbine (100) à gaz, comprenant un ensemble suivant au moins l'une des revendications 1 à 5.
